# EUROPEAN PATENT APPLICATION

(11) **EP 3 915 700 A1**
(43) Date of publication of application: **01.12.2021**
(21) Application number: 20177005.4
(22) Date of filing: 28.05.2020
(51) Int. Cl.: B22F 3/105, B29C 64/25, B29C 64/259, B33Y 30/00

(54) **MACHINE FOR MANUFACTURING THREE-DIMENSIONAL COMPONENTS**

(71) Applicant: Trumpf Sisma S.r.l., 36015 Schio (VI) (IT)
(72) Inventor: Cavalcabo, Guglielmo, 20159 Milano (IT); Guzzonato, Alessio, 36015 Schio (IT)
(74) Representative: Trumpf Patentabteilung

(57) **Abstract**

The invention relates to a machine for manufacturing three-dimensional components (12) by selectively solidifying powdery build-up material (29) with a process beam (16) in a process chamber (22), which comprises a machine base frame (14), the machine base frame (14) having a machine frame (31) and a supporting frame (32) which is attachable thereto, the supporting frame (32) accommodates at least one process chamber (22) or at least one construction cylinder (24), and at least one interface (41) is formed between the supporting frame (32) and the machine frame (31), by which interface (41) the supporting frame (32) is held with respect to the machine frame (31). (See Figure 2)

## Description

### Description

### Machine for manufacturing three-dimensional components

The invention relates to a machine for manufacturing three-dimensional components by layer-by-layer solidification of powdered build-up material with a process jet.

EP 1 925 435 B1 discloses a device of this kind for the layer-by-layer production of a three-dimensional object. This device comprises a machine frame. A process chamber with a working plane is provided on the machine frame. Furthermore, the machine frame accommodates an energy source for generating a process beam, which is guided into the process chamber via deflecting mirrors and a scanner. In the working plane, a build-up cylinder with a substrate plate that can be moved vertically is provided, on which the three-dimensional object is created by layer-by-layer solidification of a build-up material applied in layers by means of the process beam. To ensure that this device cannot tip over, support feet are provided on the machine frame, which form a three-point support on the substrate. The machine base frame has a triangular design with three base supports to which the support feet are attached.

From DE 10 2017 124 424 A1, a machine for the production of three-dimensional components by layer-by-layer solidification of powdery build-up material by means of a process beam is also known. This machine comprises a machine frame. All components for the construction of this device are attached to this machine frame.

The quality requirements for the production of such three-dimensional components are constantly increasing.

The invention is based on the object of proposing a device for the manufacturing of three-dimensional components, by which an increased positioning accuracy of the process beam is made possible during the production of the three-dimensional components.

This object is solved by a device in which a supporting frame is provided which accommodates at least one process chamber with a working plane or at least one construction cylinder and at least one interface is provided between the supporting frame and the machine frame by which the supporting frame is held to the machine frame. This interface makes it possible to decouple the supporting frame from the machine frame. In this way, influences from the machine frame, such as thermal stresses, mechanical stresses, vibrations, shocks during transport of the machine, can be decoupled from the supporting frame. This mechanical interface thus enables the support frame to be accommodated in the machine frame without any tension. This can enable improved precision in the manufacture of three-dimensional components. In addition, the mechanical interface can decouple heat transfer and/or vibrations that impair quality during the production of three-dimensional components.

According to a preferred embodiment of the machine, at least one interface is provided by a three-point support between the machine frame and the support frame. This three-point support can be used to ensure stable mounting and alignment of the support frame with the machine frame.

The three-point support is preferably designed with detachable connection arrangements. This has the advantage that the support frame can be easily assembled and disassembled to the machine frame. It is also preferable that the support frame can be easily adjusted and/or aligned with the machine frame.

The support frame is preferably attached to the machine frame only by the three-point support. This enables that the support frame can be supported by the main frame in a stress-fee manner. The support frame can be freely hung in the machine frame. All of the forces resulting from the supporting frame are carried by the machine frame over the three-point support.

The detachable connecting arrangements are preferably provided between a support portion provided on the machine frame and at least one support portion provided on the supporting frame. Preferably, at least in this area, the support section and the support portion are aligned with each other in the vertical direction. This allows a simple design to be created.

The detachable connection arrangement preferably comprises a pin which is connected at one end section by a clamp or screw connection to the support section on the machine frame and at the opposite end section by a clamp or screw connection to the support portion on the supporting frame. This detachable connection arrangement is simple in construction and allows a high mechanical load absorption in order to carry the weight of the supporting frame together with the components and/or parts absorbed by it and preferably to transfer the load to the machine frame.

Advantageously, the at least one detachable connection arrangement includes at least one compensating element for aligning the longitudinal axis of the pin in the interface. Thus, an angular compensation can be given in the position of the pin between the supporting portion of the machine frame and the supporting portion on the supporting frame. Furthermore, this can reduce tension between the supporting frame and machine frame. These compensating elements can, for example, be formed by two discs lying one on top of the other, one disc having a convex surface, which lies against a concave surface on the opposite disc.

Another preferred embodiment of the device provides that the support frame comprises a base frame, preferably a closed at the base frame, from which two opposing side wall support structures extend, which are stiffened with a rear wall and preferably form a U-shaped frame structure. At least one support section is provided on each outer side of the side wall supporting structures, in particular on each outer side of the side wall supporting structure. This constructional design enables the supporting frame to be constructed in a mechanically stable manner in order to compensate for the forces occurring during the working process, for example by a traversing movement of the substrate plate in the build-up cylinder or a traversing movement of the working cylinder for dispensing a powdery build-up material from a storage container as well as the traversing movement of a levelling and compensating element along a working plane in the process chamber.

The machine frame of the machine comprises advantageously a base support on which a supporting frame structure is built up from several longitudinal and/or transverse profiles, in particular struts, and between two longitudinal profiles lying opposite each other in pairs a receiving space for the supporting frame is formed and at least one supporting section is provided on each of the longitudinal profiles assigned to each other in pairs. This structure of the supporting structure enables the supporting frame to be easily inserted into the machine frame. The supporting frame can already be completed with the components to be accommodated.

The support frame is preferably connected between the support portion of one side wall supporting structure and the support section of the machine frame by a single detachable connecting arrangement and is connected to the opposite side wall supporting structure between the support section and the support portion of the machine frame by two detachable connecting elements arranged at a distance from each other. This can provide a stable three-point support and mechanical decoupling between the support frame and the machine frame.

It is advantageous that one detachable connecting arrangement is provided on the one side wall supporting structure centrally to the two opposite detachable connecting arrangements of the opposite side wall supporting structure, which are arranged at a distance from each other. This allows a statically determined arrangement of the supporting frame to the machine frame.

The invention as well as other advantageous embodiments and further improvements are described and explained in more detail below on the basis of the examples shown in the drawings. The features to be taken from the description and the drawings can be applied individually on their own or in any combination in accordance with the invention. Show it:
Figure 1 a schematic view of a machine for the production of three-dimensional components,
Figure 2 a schematic view of a machine base frame of the machine for the production of three-dimensional components with a machine frame and a support frame,
Figure 3 a perspective view of the machine frame as shown in Figure 2,
Figure 4 a perspective view of the supporting frame as shown in Figure 2,
Figure 5 a perspective view of the supporting frame as shown in Figure 4 with components of the device for the production of three-dimensional parts,
Figure 6 a detailed perspective view of an interface between supporting frame and machine frame, and
Figure 7 a schematic sectional view of a detachable connecting arrangement in the interface as shown in Figure 6.

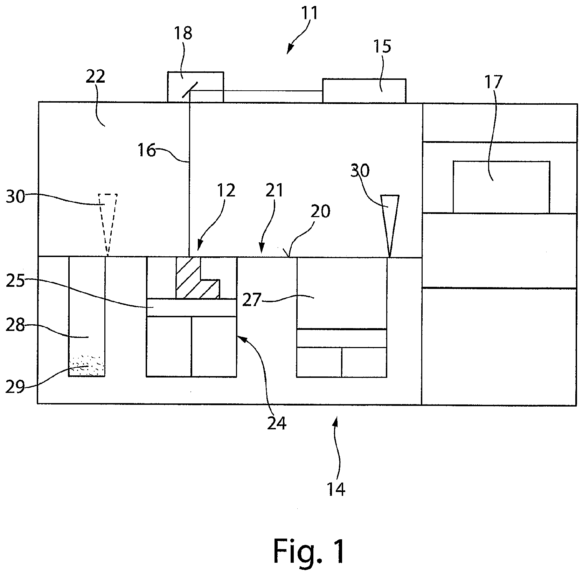

Figure 1 shows a schematic view of a machine 11 for the production of a three-dimensional component 12 by successive solidification of layers of a powdery build-up material 29. This machine 11 comprises a machine base frame 14 and a beam source 15 arranged on the machine frame 14, for example in the form of a laser source. This beam source 15 emits a process beam 16, which is deflected and guided via a beam deflection device 18 onto a working plane 20 of a working surface 21 in a process chamber 22. The beam deflection device 18 can be designed in the form of one or more controllable mirrors, in particular in the form of a scanner. Below the working plane 20, a construction cylinder 24 with a substrate plate 25 is provided, which can be moved within the construction cylinder 24 in order to create the three-dimensional component 12 based on it. A storage chamber 27 is provided adjacent to the construction cylinder 24, through which powdered construction material 29 is provided. Opposite to the construction cylinder 24, a collecting chamber 28 is provided. By means of an application and levelling device 30, powdered construction material 29 is fed to construction cylinder 24 from a right-hand starting position shown in Figure 1. The application and levelling device 30 transfers unneeded construction material 29 to the collecting chamber 28 (left end position) so that it can be processed and reused.

The structure material 29 preferably consists of a metal or ceramic powder. Other materials suitable and used for laser melting and laser sintering can also be used. The process chamber 22 is preferably hermetically sealed. The process chamber 22 is filled with inert gas or an inert gas for the production of the three-dimensional component 12 in order to avoid oxidation when melting the build-up material 29.

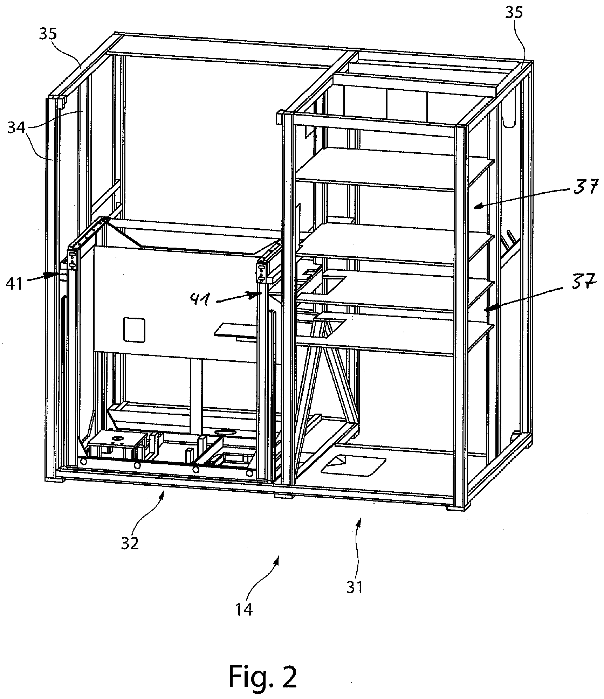

Figure 2 shows a perspective view of the machine base frame 14 without further components. This machine base frame 14 comprises a machine frame 31 and a supporting frame 32, which is positioned in the machine frame 31. The machine frame 31 is made up of several longitudinal profiles 34 and/or transverse profiles 35. These can be bolted, riveted together and/or connected by a clamp connection. The longitudinal profiles 34 and transverse profiles 35 form a supporting frame work 36 to which components of the machine 11 can be attached or fastened. In an area adjacent to the supporting frame work 32, for example, one or more slide-in modules 37 are formed, for example, in order to position electrical components such as a control device and/or data processing device or the like.

At least one interface 41 is formed between the machine frame 31 and the supporting frame 32. This at least one interface 41 makes it possible for the supporting frame 32 to be positioned in a stress-free arrangement with respect to the machine frame 31, in particular for it to be provided in a deformation-free arrangement with respect to the machine frame 31.

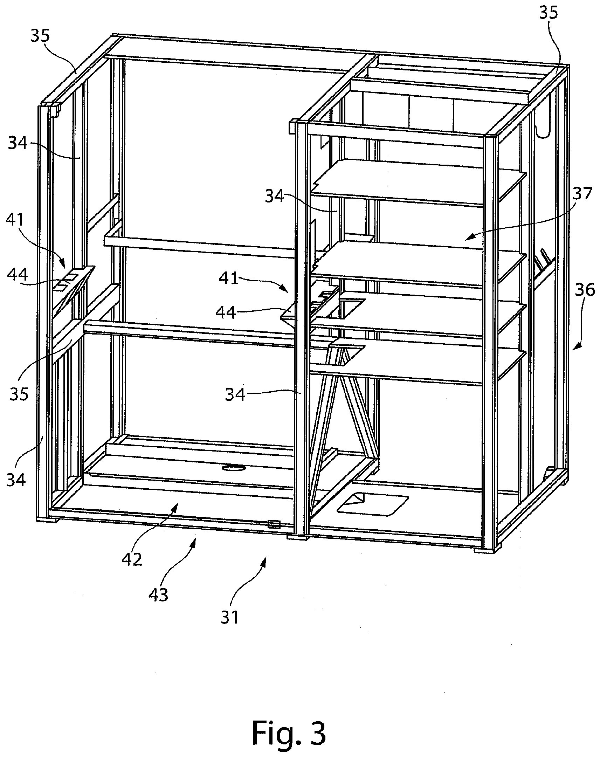

Figure 3 shows a perspective view of the machine frame 31 without the supporting frame 32. The machine frame 31 has a receiving space 42 in which the support frame 32 can be inserted. This receiving space 42 is formed by a base support 43, which has at least two longitudinal profiles 34 on each of its two opposite narrow sides, which form a section of a side wall or the side wall of the machine frame 31. At least one support section 44 is arranged on or between these two longitudinal profiles 34. This support section 44 is aligned horizontally. This supporting section 44 forms one component of the interface 41. The supporting section 44 extends flat, preferably between the two longitudinal profiles 34. In addition, the supporting section 44 can be supported by at least one further stiffener, which also extends between the longitudinal profiles 34 in the horizontal direction and/or in the vertical direction and is preferably attached to them.

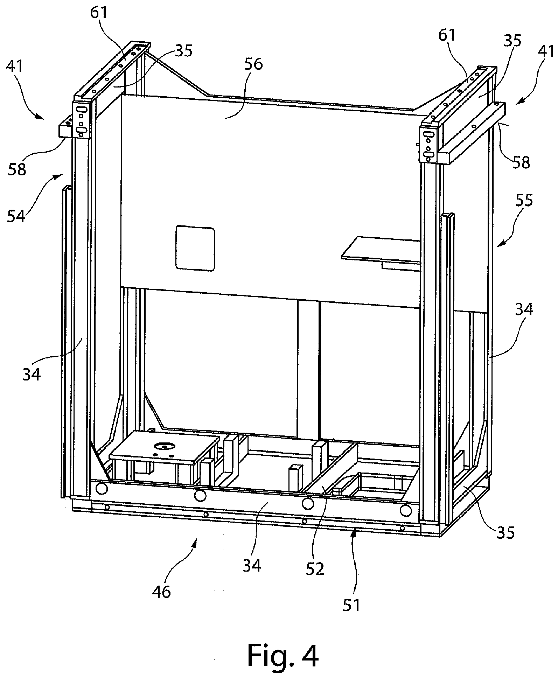

Figure 4 shows a perspective view of the supporting frame 32. This supporting frame 32 comprises a base frame 51, which is for example rectangular in shape. This base frame 51 is preferably designed as a closed base frame consisting of longitudinal and transverse profiles 34, 35. In particular, stiffening ribs 52 can be provided between the longitudinal profiles 34. A side wall supporting structure 54 is provided on the narrow side of the base frame 51. This side wall supporting structure 54 is preferably designed as a closed frame. The longitudinal profiles 34 and transverse profiles 35 can also be provided for this purpose. The side wall support structures 54, 55 are connected to each other by a rear wall 56. This creates a U-shaped frame structure 57. The rear wall 56 can be designed in the form of a panel. Alternatively, longitudinal or transverse profiles 34, 35 can also extend between the opposite side wall support structures 54, 55.

A support portion 58 is provided on each outer side of the side wall supporting structure 54, 55. This support portion 58 is advantageously aligned horizontally. This support portion 58 can be attached to a longitudinal or transverse profile 33, 34. This support portion 58 is a further component of the interface 41.

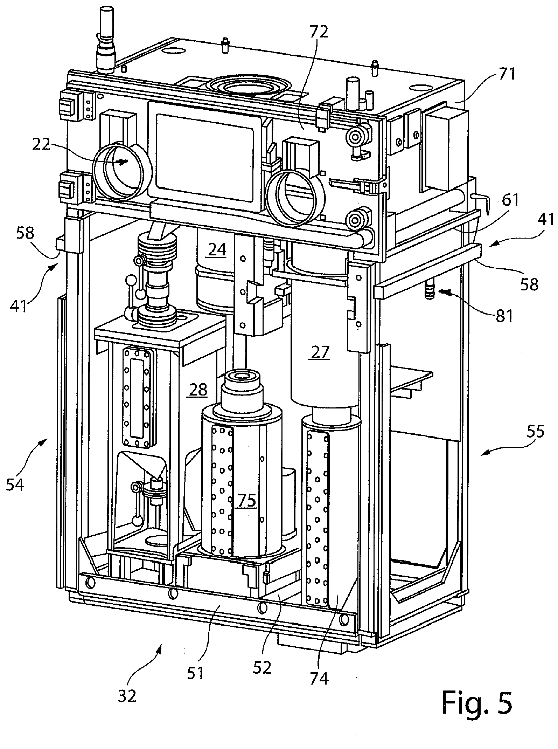

Figure 5 shows a perspective view of the support frame 32 as shown in Figure 4, which is equipped with components of machine 11. At the upper end of the sidewall supporting structures 54, 55 there are connection surfaces 61, which serve to accommodate a housing 71, in which the process chamber 22 is provided. This housing 71 may have a door 72 that can be opened from the front side, through which the process chamber 22 is accessible. Working surface 21 is formed on a lower side of the process chamber 22. This working surface 21 is assigned the storage chamber 27 and an associated lifting cylinder 74, in order to transfer the stored build-up material to the working plane 20. The construction cylinder 24 is provided adjacent to the storage chamber 27. A lifting cylinder 75 for triggering a traversing movement of the substrate plate 25 within the construction cylinder 23 is supported on the base frame 51 of the supporting frame 32. The same applies to the collecting chamber 28, which is supported on a connection surface on the base frame 51. The U-shaped frame structure 57 of the supporting frame 32 is additionally stiffened by the housing 71.

The supporting frame 32 with the components mounted on it can be designed as a pre-assembled unit. This supporting frame 32 equipped with components can be inserted into the machine frame 31. The supporting frame 32 is connected to the machine frame 31 through the interfaces 41. After the insertion of the support frame 32 into the machine frame 31 the support frame 32 is suspended freely without any connection to the base frame 51 of the machine frame 31 in particular only through the interfaces 41. The support frame 31 is freely hanging in the machine frame 31 and is only supported by detachable connection arrangements 81.

To fix the supporting frame 32 to the machine frame 31, at least one detachable connecting arrangement 81 is assigned to each interface 41.

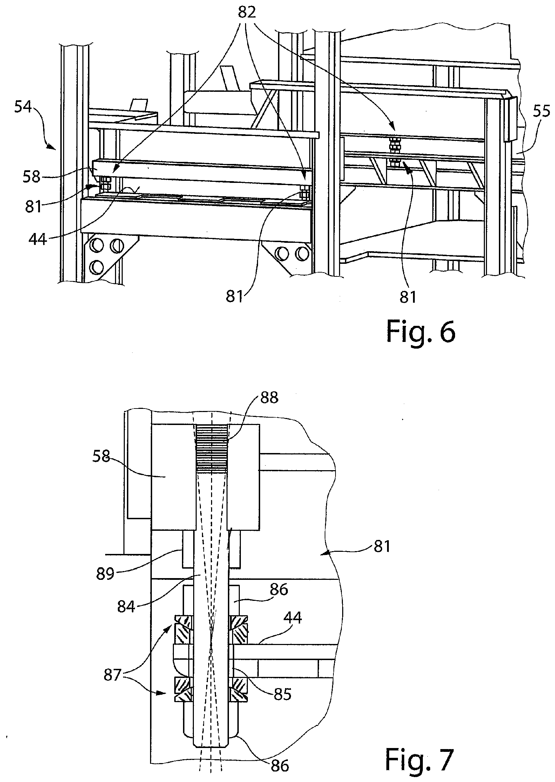

Figure 6 shows a perspective view of at least one interface 41 between the supporting frame 32 and the machine frame 31. A three-point support 82 is provided between supporting frame 32 and machine frame 31. This three-point support 82 is formed by three detachable connecting arrangements 81. At one interface 41, for example at the right-hand side wall supporting structure 54, a detachable connection arrangement 81 is provided. Two detachable connection arrangements 81 are provided at the opposite sidewall supporting structure 55. The two detachable connecting arrangements 81, which engage on the one hand with the supporting section 44 of the machine frame 31 and on the other hand with the supporting portion 58 of the supporting frame 32, are aligned with one another in a triangular arrangement. The two detachable connecting arrangements 81, which are provided, for example, on the left-hand side wall supporting structure 55, are aligned with a distance between them. The one detachable connection assembly 81 provided on the opposite sidewall supporting structure 44 is preferably positioned centrally to the two opposite detachable connection assemblies 81. By this statically determined attachment of the supporting frame 32 at its upper end section to the machine frame 31, occurring stresses, deformations or the like can be decoupled so that they are not transmitted from the machine frame 31 to the process chamber 22, in particular to the housing 71 of the process chamber 22.

Figure 7 shows a schematic sectional view of an embodiment of the detachable coupling assembly 81. This detachable coupling assembly 81 comprises a pin 84, which is positioned in a hole 85 in the supporting section 44. The pin 84 is positioned in relation to the supporting section 44 by means of fastening elements 86, in particular screw elements. Preferably, at least one compensating element 87 is provided between the fastening elements 86 and the supporting section 44. Such compensating elements 87 serve for angle compensation of pin 84, allowing the longitudinal axis of pin 84 to be aligned in different angular positions with respect to a vertical of the supporting section 44. At the opposite end of the pin 84, for example, it has a thread 88, which can be mounted, in particular screwed, in the support portion 58. In addition, the pin 84 can have a further fastening element 89 adjacent to the thread 88. This fastening element 89 is adjustable along the longitudinal axis of the pin 84, preferably via a further thread provided on the pin 84, and is used in particular to support the support portion 58. Alternatively, the upper end of the pin 84 can be provided on the support section 58 analogous to the lower end of the pin 84. Alternatively, the detachable connection arrangement 81 can be provided rotated 180° to the orientation shown in Figure 7.

This design of the detachable connection arrangement 81 allows a distance to be set in the vertical direction between the supporting section 44 and the support portion 58. At the same time, the compensating elements 87 can be used to compensate for tolerances if the bore in support portion 58 and the bore in supporting section 44 are not completely aligned.

## Claims

1. A machine for manufacturing three-dimensional components (12) by selectively solidifying powdered build-up material (29) with a process beam (16) in a process chamber (22) comprising a machine base frame (14), **characterized by** this,
- in that the machine base frame (14) has a machine frame (31) and a supporting frame (32) which is attachable thereto,
- that the supporting frame (32) accommodates at least one process chamber (22) or at least one construction cylinder (24), and
- in that at least one interface (41) is formed between the supporting frame (32) and the machine frame (31), by means of which the supporting frame (32) is held with respect to the machine frame (31).

2. Machine according to claim 1, **characterized in that** the at least one interface (41) is provided by a three-point support (82) between the machine frame (31) and the supporting frame (32).

3. Machine according to claim 1 or 2, **characterized in that** the support frame (32) is only attached to the machine frame (31) by the at least one interface (41), in particular by the three-point support (82).

4. Machine according to claim 2 or 3, **characterised in that** the three-point support (82) is formed by detachable connecting arrangements (81).

5. Machine according to claim 4, **characterized in that** the detachable connecting arrangement (81) is provided between a supporting section (44) provided on the machine frame (31) and a supporting portion (58) provided on the supporting frame (32).

6. Machine according to claim 4 or 5, **characterized in that** the detachable connecting arrangement (81) comprises a pin (84) which is connected at one end portion by a clamping or screwing to the supporting section (44) of the machine frame and at the opposite end portion by a clamping or screwing to the supporting portion (58) of the supporting frame (32).

7. Machine according to one of claims 4 to 6, **characterized in that** the at least one detachable connection arrangement (81) comprises at least one compensating element (87) for aligning the longitudinal axis of the pin (84) in the interface (41).

8. Machine according to one of the preceding claims, **characterized in that** the supporting frame (32) has a base frame (51) provided on the floor side, from which two side wall supporting structures (54, 55) opposite one another extend, which are stiffened with a rear wall (56), and a supporting portion (58) is provided on each of the side wall supporting structures (54, 55).

9. Machine according to claim 8, **characterized in that** the side wall support structures (54, 55) and the rear wall (56) form a U-shaped frame structure (57).

10. Machine according to claim 8 or 9, **characterized in that** a support portion (58) is provided on each outer side of the sidewall support structure (54, 55).

11. Machine according to one of the preceding claims, **characterized in that** the machine frame (31) has a base support (43) on which a supporting framework (36) is constructed from a plurality of longitudinal profiles (34) and/or transverse profiles (35), and between two longitudinal profiles (34), which are opposite one another in pairs, a receiving space (42) for the supporting frame (32) is formed, and between the two longitudinal profiles (34), which are opposite one another in pairs, at least one supporting section (44) is provided in each case.

12. Machine according to any of the foregoing claims, **characterized in that** the supporting frame (32) has a single detachable connection arrangement (81) at an upper end portion of one side wall supporting structure (54, 55) between the support portion (58) of said one side wall supporting structure (54) and the supporting section (44) of the machine frame (31), and two detachable connection arrangements (81) spaced apart from each other are provided to the opposite side wall supporting structure (55) between the support portion (58) and the supporting section (44) of the machine frame (31) associated therewith.

13. Machine according to claim 12, **characterized in that** the one detachable connection arrangement (81) located in the interface (41) is aligned centrally with the two opposite detachable connection arrangements (81).
